# EUROPÄISCHE PATENTSCHRIFT

(11) **EP 4 488 075 B1**
(45) Veröffentlichungstag und Bekanntmachung des Hinweises auf die Patenterteilung: **18.03.2026**
(21) Anmeldenummer: 24183957.0
(22) Anmeldetag: 24.06.2024
(51) Int. Cl.: B60C 11/04, B60C 11/13, B60C 11/03, B60C 11/12

(54) **LAUFSTREIFEN FÜR EINEN FAHRZEUGREIFEN**
TREAD FOR A VEHICLE TYRE
BANDE DE ROULEMENT POUR UN PNEU DE VÉHICULE

(30) Priorität: 03.07.2023 DE 102023206286
(43) Veröffentlichungstag der Anmeldung: 08.01.2025
(73) Patentinhaber: Continental Reifen Deutschland GmbH, 30175 Hannover (DE)
(72) Erfinder: Proksa, Andrej, 020 01 Púchov (SK); Korbas, Mario, 020 01 Púchov (SK)
(74) Vertreter: Continental Corporation

(56) Entgegenhaltungen:
- EP-A1- 3 888 948
- EP-A1- 3 974 208
- DE-A1- 102020 212 560
- US-A- 2 637 362
- US-A- 2 843 172

## Beschreibung

Die Erfindung betrifft einen Laufstreifen für einen Fahrzeugreifen, wobei eine Profilrille mit einem radial oberen Bereich und einem radial unteren Bereich sowie mit zwei Rillenflanken in dem Laufstreifen ausgebildet ist, wobei in dem radial oberen Bereich der Profilrille laterale Überhänge so an den Rillenflanken ausgebildet sind, dass eine Rillenbreite in dem radial oberen Bereich kleiner ist als in dem radial unteren Bereich, wobei die Profilrille in dem radial oberen Bereich einen zickzackförmigen und/oder geschwungenen Verlauf annimmt und in dem radial unteren Bereich einen geradlinigen Verlauf annimmt.

Laterale Überhänge in radial oberen Bereichen von Profilrillen haben den Vorteil, dass bei einem solchermaßen ausgestatteten Laufstreifen im Neuzustand an der Lauffläche mehr Material vorhanden ist als ohne die Überhänge, was zu einem besseren Trockengriff und einem langsameren Abrieb in Radialrichtung führen kann. Ein weiterer Vorteil einer geringeren Rillenbreite im radial oberen Bereich kann sein, dass sich die Rillenflanken an den lateralen Überhängen unter Belastung des Laufstreifens aneinander abstützen können, was zu einer verbesserten Steifigkeit führen kann. Dadurch, dass die Profilrille in dem radial unteren Bereich eine höhere Rillenbreite aufweist als in dem radial oberen Bereich mit den lateralen Überhängen, kann gleichzeitig eine gute Drainagefunktion sichergestellt werden. Durch einen wellenförmigen Verlauf der Profilrille in einem radial oberen Bereich, insbesondere an einer Lauffläche, kann zusätzliche Kantenlänge geschaffen werden, was sich positiv auf die Traktionseigenschaften, insbesondere auf den Nassgriff eines mit einer entsprechend ausgestalteten Profilrille ausgestatteten Fahrzeugreifens auswirken kann. DE 10 2020 204 226 A1 beschreibt eine Umfangsrille, welche sich in radialer Richtung und beginnend bei der Laufstreifenperipherie aus einer Außenrille und einer Innenrille zusammensetzt, welche an ihrer breitesten Stelle eine Breite aufweist, die um mindestens 1 mm größer ist als die Breite der Außenrille, wobei die Außenrille in einer Wellenform verläuft.

Ein Fahrzeugreifen, insbesondere ein an einer Lenkachse eingesetzter Fahrzeugreifen, kann aus der Richtung einer axialen Außenseite stärker beansprucht werden als aus Richtung einer axialen Mitte. Eine asymmetrische Ausgestaltung eines Rillenquerschnitts kann in diesem Zusammenhang den Vorteil bieten, dass eine Quersteifigkeit zu den beiden Seiten der Profilrille unterschiedlich eingestellt werden kann. Weiterhin kann einer erhöhten Rissanfälligkeit auf einer axial nach außen gerichteten Seite der Profilrille durch eine geeignete asymmetrische Ausgestaltung insbesondere des Rillenbodens gezielt begegnet werden. DE 10 2020 212 560 A1 stellt in diesem Zusammenhang einen Fahrzeugluftreifen mit einem eine Profilierung aufweisenden Laufstreifen mit einer in Umfangsrichtung des Fahrzeugluftreifens umlaufenden Umfangsrille vor, wobei ein zweiter, radial innerer Rillenabschnitt gegenüber einem ersten Rillenabschnitt in Axialrichtung erweitert ist und wobei die Querschnittsfläche des zweiten Rillenabschnitts asymmetrisch zur Radialrichtung ausgebildet ist.

US 2 843 172 A beschreibt einen Reifen umfassend eine Umfangsrille mit einem gewunden verlaufenden äußeren Bereich und einem geraden unteren Bereich, wobei der innere Bereich an seiner Verbindung zum äußeren Bereich eine eingeschränkte Breite aufweist. EP 3 974 208 A1 beschreibt einen Reifen mit einer Umfangsrille, die einen radial äußeren und einen radial inneren Bereich aufweist, wobei die Rillenbreite im radial äußeren Bereich geringer als im radial inneren Bereich ist und wobei der radial äußere Bereich einen zickzack-förmigen Verlauf aufweist.

Der Erfindung liegt die Aufgabe zugrunde, einen Laufstreifen für einen Fahrzeugreifen zu schaffen, der sowohl gute Nässeeigenschaften als auch eine optimierte Steifigkeit und Belastbarkeit aufweist.

Die gestellte Aufgabe wird erfindungsgemäß durch die Merkmale des Anspruchs 1, nämlich unter anderem dadurch gelöst, dass, betrachtet in einer zur Längserstreckung der Profilrille senkrechten Schnittfläche, der radial untere Bereich asymmetrisch zu einer Radialrichtung ausgebildet ist.

Die Erfindung erkennt, dass eine in einem radial oberen Bereich entlang einer Längserstreckung bereits komplex ausgestaltete Profilrille in einem radial unteren Bereich in Tiefen- und Breitenrichtung noch weiter optimiert werden kann. Im Ergebnis ist erfindungsgemäß sowohl ein zur Radialrichtung senkrechter Querschnitt in dem radial oberen Bereich von einem solchen Querschnitt in dem radial unteren Bereich qualitativ verschieden als auch ein zur Längserstreckung der Profilrille senkrechter Querschnitt entlang dieser Längserstreckung veränderlich.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeugreifen angeordneten Laufstreifen mit wiederum bestimmungsgemäß an einem Fahrzeug angebrachtem Fahrzeugreifen. Hierin bezieht sich die Radialrichtung auf eine zur Rotationsachse des Fahrzeugreifens senkrechte und die Rotationsachse schneidende Richtung. In Radialrichtung nach innen bezieht sich auf die Orientierung, die in Radialrichtung der Rotationsachse zugewandt ist. In Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 180° Umdrehung des Fahrzeugreifens früher einen minimalen Abstand zum Fahrbahnuntergrund als eine in Umfangsrichtung hintere Position. Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei kleinskalige Profilelemente, wie etwa Rillen oder radial hervorstehende Rippen vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximalen Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine radial hervorstehende Rippe auf dem Laufstreifen angeordnet ist, verläuft die Basisfläche als imaginäre Fläche unter der radial hervorstehenden Rippe weiter.

Alle beschriebenen Merkmale beziehen sich insbesondere auf einen Neuzustand des Laufstreifens. Die mit den Merkmalen des Hauptanspruchs erzielten Effekte können durch bevorzugte Ausführungsformen und Ausgestaltungen unterstützt und weiter verstärkt werden

Die Profilrille ist vorzugsweise eine Umfangsrille, also eine Rille, die sich über den gesamten Umfang eines mit dem Laufstreifen ausgestatteten Fahrzeugreifens erstreckt und in sich selbst mündet.

Vorzugsweise weist der zur Längserstreckung der Profilrille senkrechte Querschnitt in dem radial unteren Bereich keine Knicke auf, sondern ist durchgehend durch wohldefinierte Tangenten beschreibbar. Weiter vorzugsweise sind alle Krümmungen in dem Querschnitt mit Krümmungsradien von mehr als 3 mm beschreibbar. Ein Übergang zum radial oberen Bereich muss hiervon nicht betroffen sein, sondern kann Abkantungen und/oder durch einen Krümmungsradius von weniger als 3 mm beschreibbare Krümmungen aufweisen.

Der radial untere Bereich der Profilrille kann auf unterschiedliche Art und Weise asymmetrisch zur Radialrichtung ausgebildet sein. Die Profilrille kann einen Rillenboden umfassen, wobei der Rillenboden in dem radial unteren Bereich der Profilrille in einem ersten gekrümmten Teilbereich in die erste Rillenflanke übergehen kann und/oder in einem zweiten gekrümmten Teilbereich in die zweite Rillenflanke übergehen kann. Hierbei ist vorzugsweise ein minimaler den ersten gekrümmten Teilbereich charakterisierender Krümmungsradius kleiner als ein minimaler den zweiten gekrümmten Teilbereich charakterisierender Krümmungsradius. Wenn die gekrümmten Teilbereiche Kreisbögen sind, wird jeder gekrümmte Teilbereich nur durch jeweils einen Krümmungsradius charakterisiert, der dann jeweils als minimaler Krümmungsradius gilt. Vorzugsweise weist die zweite Rillenflanke hierbei nach axial außen und die erste Rillenflanke in Richtung des Reifenäquators. Durch eine geringere Krümmung auf der axialen Außenseite und eine damit verbundene geringere Rissanfälligkeit kann einer stärkeren Beanspruchung von dieser Seite des Laufstreifens Rechnung getragen werden. In einer bevorzugten Ausführungsform beträgt ein Verhältnis zwischen dem minimalen den ersten gekrümmten Teilbereich charakterisierenden Krümmungsradius und dem minimalen den zweiten gekrümmten Teilbereich charakterisierenden Krümmungsradius zwischen 0,3 und 0,7 und vorzugsweise zwischen 0,45 und 0,55.

Der Rillenboden kann zwischen den gekrümmten Teilbereichen geradlinig verlaufen. In einer bevorzugten Ausführungsform ist der Rillenboden zwischen den beiden gekrümmten Teilbereichen hingegen ebenfalls gekrümmt. Ein minimaler den Rillenboden charakterisierender Krümmungsradius kann in einem Verhältnis von 2 bis 3, vorzugsweise von 2,4 bis 2,6 zu dem den zweiten gekrümmten Teilbereich charakterisierenden Krümmungsradius stehen. In einer Ausführungsform lassen sich der erste gekrümmte Teilbereich, der zweite gekrümmte Teilbereich und der Rillenboden jeweils durch einen Kreisbogen beschreiben, wobei die Kreisbögen tangential ineinander übergehen und wobei der radial tiefste Punkt der Profilrille am Berührungspunkt zwischen dem ersten gekrümmten Teilbereich und dem Rillenboden gelegen ist.

Der gesamte radial untere Bereich der Profilrille kann im zur Längserstreckung senkrechten Querschnitt durchgehend gekrümmt sein. Alternativ kann radial oberhalb des ersten gekrümmten Teilbereichs und/oder radial oberhalb des zweiten gekrümmten Teilbereichs innerhalb des radial unteren Bereichs ein geradliniger Teilbereich einer jeweiligen Rillenflanke anschließen. Insbesondere kann der Übergang zwischen dem ersten gekrümmten Teilbereich und einem geradlinigen Teilbereich der ersten Rillenflanke radial weiter unten erfolgen als der Übergang zwischen dem zweiten gekrümmten Teilbereich und einem geradlinigen Teilbereich der zweiten Rillenflanke. In einer Ausführungsform erfolgt in dem radial unteren Bereich der Profilrille ein Übergang von dem ersten gekrümmten Teilbereich in den geradlinigen Teilbereich der ersten Rillenflanke, nicht aber von dem zweiten gekrümmten Teilbereich in einen geradlinigen Teilbereich der zweiten Rillenflanke; mit anderen Worten kann sich der zweite gekrümmte Abschnitt in dem zur Längsrichtung senkrechten Querschnitt des radial unteren Bereichs der Profilrille bis zum Übergang in den radial oberen Bereich hinziehen, ohne dass in dem radial unteren Bereich ein geradliniger Teilbereich der zweiten Rillenflanke angeordnet wäre.

Die Rillenflanken weisen vorzugsweise Neigungswinkel gegenüber der Radialrichtung auf. Ein Neigungswinkel einer Rillenflanke kann auch lokal als Neigungswinkel einer Tangente an einem gekrümmten Teilbereich bestimmt werden. Neigungswinkel der Rillenflanken sind positiv, wenn sie sich nach radial oben und von der jeweils gegenüberliegenden Rillenflanke fortweisend öffnen, sodass eine V-förmige Rille beispielsweise zwei unter positiven Winkeln geneigte Rillenflanken aufweisen würde. Die Neigungswinkel der Rillenflanken in dem radial unteren Bereich sind vorzugsweise durchgehend positiv. Wenn die zweite Rillenflanke nach axial außen und die erste Rillenflanke in Richtung des Reifenäquators weist, kann eine Quersteifigkeit in axial äußerer Richtung gegenüber der axial inneren Richtung erhöht werden, indem ein minimaler Neigungswinkel der zweiten Rillenflanke in dem radial unteren Bereich größer gewählt wird als ein minimaler Neigungswinkel der ersten Rillenflanke in dem radial unteren Bereich. Auf diese Weise kann einer stärkeren Belastung des Laufstreifens von axial außen gezielt begegnet werden. Ein minimaler Neigungswinkel einer Rillenflanke in dem radial unteren Bereich ist vorzugsweise im Bereich eines geradlinigen Teilbereichs der Rillenflanke gegeben und/oder kann an einem radial oberen Ende des radial unteren Bereichs gegeben sein. Ein minimaler Neigungswinkel der ersten Rillenflanke in dem radial unteren Bereich und ein minimaler Neigungswinkel der zweiten Rillenflanke in dem radial unteren Bereich können in einem Verhältnis zwischen 1:3 und 1:2 stehen. Der minimale Neigungswinkel der ersten Rillenflanke in dem radial unteren Bereich kann zwischen 4° und 8° liegen.

Die Grenze zwischen dem radial oberen Bereich und dem radial unteren Bereich kann auf dem radialen Niveau eines radial unteren Endes der lateralen Überhänge definiert werden und/oder dort, wo die Rillenbreite von maximaler Profiltiefe kommend und in Richtung der Basisfläche blickend abzunehmen beginnt.

Zwischen den lateralen Überhängen im radial oberen Bereich und dem radial unteren Bereich können abgeschrägte Übergänge an den Rillenflanken ausgebildet sein. Wenn die Rillenbreite im Bereich der radialen Erstreckung der abgeschrägten Übergänge kleiner ist als in radial weiter unten gelegenen Positionen im radial unteren Bereich, können die abgeschrägten Übergänge dem radial oberen Bereich zugerechnet werden. Die abgeschrägten Übergänge können in einem zur Längserstreckung der Profilrille senkrechten Querschnitt Neigungswinkel gegenüber der Radialrichtung aufweisen, wobei die Neigungswinkel nach radial oben und zur jeweils gegenüberliegenden Rillenflanke hin geöffnet sind, sodass die abgeschrägten Übergänge den radial unteren Bereich überdachen. Ein Neigungswinkel kann, gemessen in der Mitte einer radialen Erstreckung bzw. einer Breitenerstreckung eines abgeschrägten Übergangs, zwischen 50° und 70° betragen.

Radial oberhalb der abgeschrägten Übergänge können die lateralen Überhänge so ausgebildet sein, dass sich ein radialer Bereich konstanter Rillenbreite ergibt. Insbesondere können die Rillenflanken an den lateralen Überhängen in dem radialen Bereich konstanter Rillenbreite parallel zur Radialrichtung verlaufen. Ein radialer Erstreckungsanteil des radialen Bereichs konstanter Rillenbreite an dem radial oberen Bereich kann zwischen 0,1 und 0,5 betragen.

An den lateralen Überhängen an den Rillenflanken im radial oberen Bereich können Fasen als Übergänge zu der Basisfläche des Laufstreifens ausgebildet sein. Die Fasen können Neigungswinkel mit der Radialrichtung einschließen, wobei die Neigungswinkel radial nach außen und von der jeweils gegenüberliegenden Rillenflanke fortweisend geöffnet sind, sodass die Rillenbreite im radialen Erstreckungsbereich der Fasen nach radial außen zunimmt. Ein Neigungswinkel kann, gemessen in der Mitte einer radialen Erstreckung bzw. einer Breitenerstreckung einer Fase, zwischen 20° und 40° betragen.

Übergänge zwischen dem radial unteren Bereich der Profilrille, den abgeschrägten Übergängen, dem radialen Bereich konstanter Rillenbreite und/oder den Fasen im radial oberen Bereich der Profilrille sind vorzugsweise jeweils verrundet, sodass der gesamte Querschnitt der Profilrille in einer zur Längserstreckung senkrechten Schnittfläche vorzugsweise durch wohldefinierte Tangenten beschreibbar ist.

Die Rillenbreite nimmt vorzugsweise in dem radial oberen Bereich einen Minimalwert an; mit anderen Worten liegt die geringste Rillenbreite, betrachtet über die gesamte radiale Tiefe der Profilrille, vorzugsweise in dem radial oberen Bereich vor. Der Minimalwert beträgt vorzugsweise zwischen 0,5 mm und 5 mm, weiter vorzugsweise zwischen 1 mm und 1,2 mm. Weiterhin wird der Minimalwert vorzugsweise in dem radialen Bereich konstanter Rillenbreite, radial oberhalb der abgeschrägten Übergänge und/oder radial unterhalb der Fasen erreicht. Insbesondere kann die Rillenbreite den Minimalwert in einer radialen Tiefe zwischen 25% und 45%, vorzugsweise bei 30% der radialen Tiefe der Profilrille annehmen.

Die Rillenbreite nimmt vorzugsweise in dem radial unteren Bereich einen Maximalwert an, sodass die größte Rillenbreite mit anderen Worten, betrachtet über die gesamte Tiefe der Profilrille, in dem radial unteren Bereich vorliegt. Der Maximalwert beträgt vorzugsweise zwischen 5 mm und 15 mm. Der Maximalwert kann am radial äußeren Ende des radial unteren Bereichs erreicht werden. Insbesondere kann die Rillenbreite den Maximalwert in einer radialen Tiefe zwischen 50% und 85% der radialen Tiefe der Profilrille annehmen.

Ein zickzackförmiger und/oder geschwungener Verlauf der Profilrille in dem radial oberen Bereich ist beispielsweise dann gegeben, wenn eine in der Mitte der Rillenbreite an der Basisfläche verlaufende Linie die Form einer Sinuskurve annimmt. Bei einer entlang der Längserstreckung der Profilrille konstanten Rillenbreite folgen die Flanken der Profilrille in dem radial oberen Bereich der Linie in der Mitte der Rillenbreite. Ein zickzackförmiger Verlauf weist Ecken auf, die mit einem kleinen Radius von weniger als 3 mm verrundet sein können; ein geschwungener Verlauf ist durch Krümmungen mit Radien von mehr als 3 mm gekennzeichnet. Der Verlauf ist vorzugsweise innerhalb einer Profilrille entweder zickzackförmig oder geschwungen; es sind jedoch auch Ausführungsformen vorstellbar, in denen zickzackförmige und geschwungene Verläufe hintereinander gereiht sind. Der zickzackförmige und/oder geschwungene Verlauf muss nicht symmetrisch sein. Beispielsweise kann sich ein zickzackförmiger Verlauf im Wechsel aus langen und kurzen Abschnitten zusammensetzen, wobei lange Abschnitte länger als kurze Abschnitte sind und wobei ein Paar langer und kurzer Abschnitte jeweils einen Winkel von 90° einschließt.

Erfindungsgemäß steht eine Periodizität des zickzackförmigen und/oder geschwungenen Verlaufs im radial oberen Bereich in einem Verhältnis von 1:3 bis 1:1 zu einer Pitchlänge eines in dem Laufstreifen ausgebildeten Profils. Ein Beispiel für eine Periodizität wäre im Falle eines sinusförmigen Verlaufs die Wellenlänge der Sinuskurve und im Falle des zickzackförmigen Verlaufs aus langen und kurzen Abschnitten ein Paar aus jeweils einem langen und einem kurzen Abschnitt. Die Periodizität kann exakt sein, wobei gleichartige Abschnitte entlang der Längserstreckung der Profilrille in identischer Länge hintereinander gereiht werden; alternativ kann die Periodizität im Rahmen einer an sich bekannten Pitchlängenvariation moduliert sein, wobei gleichartige Abschnitte proportional zu einer jeweiligen Pitchlänge skaliert hintereinander gereiht werden. Mit dem genannten Längenbereich kann ein guter Kompromiss zwischen einer großen Kantenlänge auf kleiner Fläche einerseits und ausreichend großen und somit stabilen Strukturen andererseits gefunden werden. Der zickzackförmige und/oder geschwungene Verlauf im radial oberen Bereich kann senkrecht zur Längserstreckung der Profilrille entlang dieser Längserstreckung eine Spanne zwischen 2 mm und 8 mm überstreichen. Ein Beispiel für eine solche Spanne wäre im Falle eines sinusförmigen Verlaufs die doppelte Amplitude der Sinuskurve, also die senkrecht zur x-Achse gemessene Spanne zwischen Wellentälern und Wellenbergen.

Die Erfindung richtet sich außerdem auf einen Fahrzeugreifen mit einem vor- und/oder nachstehend beschriebenem Laufstreifen. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge. Besonders vorteilhaft ist die Erfindung an Fahrzeugreifen für Lastkraftwagen im Fernverkehr einzusetzen.

Die Erfindung wird nachfolgend unter Bezugnahme auf die beigefügten Zeichnungen anhand vorteilhafter Ausführungsformen beispielhaft beschrieben. Es zeigen:
Figur 1 schematisch und ausschnittsweise eine Draufsicht auf eine Ausführungsform des erfindungsgemäßen Laufstreifens,
Figur 2 schematisch eine Schnittansicht einer Profilrille gemäß der in Fig. 1 eingezeichneten Schnittlinie II-II,
Figur 3 schematisch eine auf einen radial unteren Bereich einer Profilrille konzentrierte Schnittansicht in einer weiteren Ausführungsform eines erfindungsgemäßen Laufstreifens.

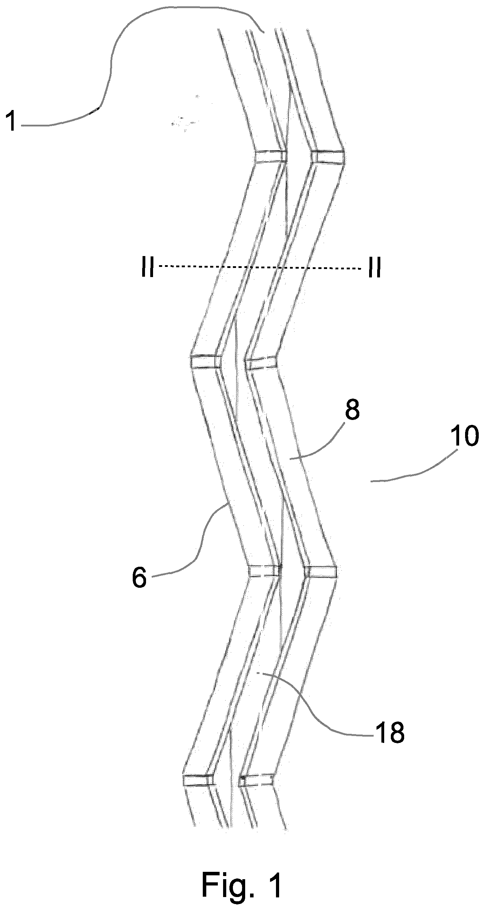

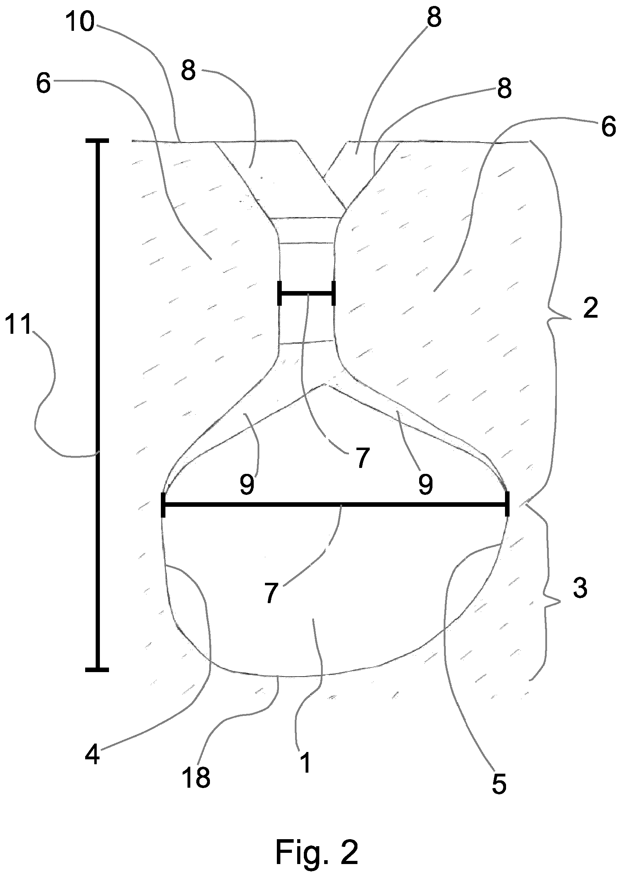

Figur 1 zeigt eine Profilrille 1, die sich als Umfangsrille um eine in der Zeichnungsebene von oben nach unten verlaufenden Umfangsrichtung erstreckt. Die Axialrichtung verläuft in der Zeichnungsebene von links nach rechts, wobei eine axiale Außenseite rechts gelegen ist. Wie an dessen in der Draufsicht gemäß Fig. 1 teilweise verborgenen geradlinigen Konturen zu erkennen, verläuft ein Rillenboden 18 in der gezeigten Ausführungsform geradlinig entlang der Umfangsrichtung. In einem radial oberen Bereich 2 der Profilrille 1 (vgl. auch Fig. 2) sind laterale Überhänge 6 so ausgebildet, dass sich ein zickzackförmiger Verlauf ergibt. Die lateralen Überhänge 6 gehen mit Fasen 8 in die Basisfläche 10 des Laufstreifens über.

Figur 2 zeigt eine Schnittansicht der Profilrille 1 in einer zur Umfangsrichtung senkrechten Schnittebene gemäß der in Fig. 1 markierten Position II-II. Der radial untere Bereich 3 erstreckt sich zwischen einem Rillenboden 18 und dem radialen Beginn der lateralen Überhänge 6 an den Rillenflanken 4, 5, wo eine Rillenbreite nach radial außen abzunehmen beginnt. Der radial obere Bereich 2 erstreckt sich zwischen dem radial äußeren Ende des radial inneren Bereichs 3 und der Basisfläche 10 an der Lauffläche des Laufstreifens. Die lateralen Überhänge 6 an den Rillenflanken 4, 5 gehen mit Fasen 8 in die Basisfläche 10 und mit abgeschrägten Übergängen 9 in den radial unteren Bereich 3 über. Ein Minimalwert der Rillenbreite 7 wird im radial oberen Bereich 2 und dort in einem radialen Bereich konstanter Rillenbreite zwischen den Fasen 8 und den abgeschrägten Übergängen 9 erreicht (vgl. den in der Zeichnungsebene waagerechten Skalenbalken im radial oberen Bereich 2). Ein Maximalwert der Rillenbreite 7 liegt in dem gezeigten Ausführungsbeispiel an der Grenze zwischen dem radial unteren Bereich 3 und dem radial oberen Bereich 2 vor (vgl. den in der Zeichnungsebene waagerechten Skalenbalken im radial unteren Bereich 3). Der Maximalwert wird bei ca. 70% der zwischen der Basisfläche 10 und dem Rillenboden 18 gemessenen radialen Tiefe 11 der Profilrille 1 erreicht (vgl. den in der Zeichnungsebene von oben nach unten verlaufenden Skalenbalken).

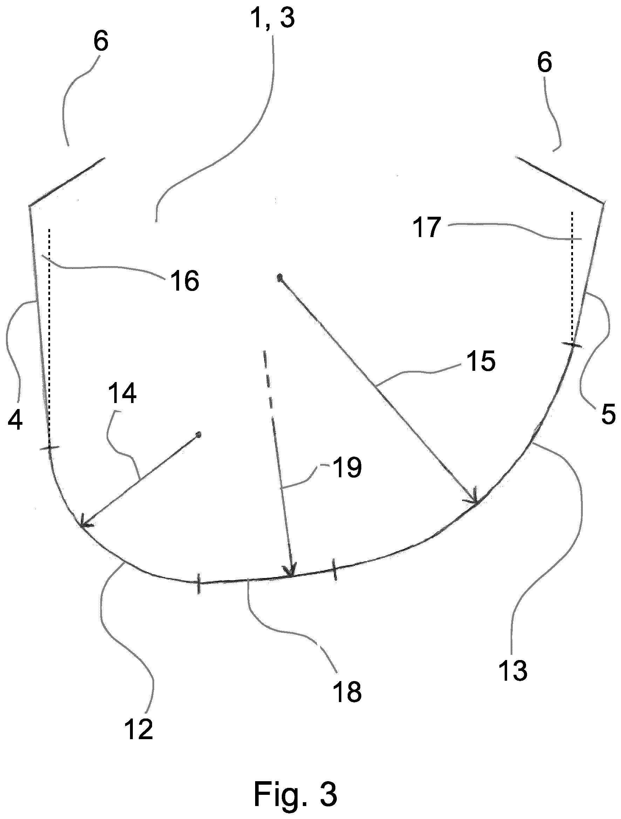

Figur 3 zeigt anhand einer weiteren Ausführungsform eine asymmetrische Ausgestaltung des radial unteren Bereichs 3 einer Profilrille 1 in einer Schnittansicht, wobei die Schnittebene senkrecht auf der Umfangsrichtung steht. Die Darstellung ist insbesondere in Hinblick auf den Übergang zum radial oberen Bereich 2 nur schematisch dargestellt und berücksichtigt beispielsweise keine ggf. vorteilhaften und/oder technisch notwendigen Verrundungen an den Übergängen in die lateralen Überhänge 6. Der Rillenboden 18 geht in einem ersten gekrümmten Teilbereich 12 in einen geradlinigen Teilbereich der ersten Rillenflanke 4 über und in einem zweiten gekrümmten Teilbereich 13 in einen geradlinigen Teilbereich der zweiten Rillenflanke 5 über. Ein den ersten gekrümmten Teilbereich 12 charakterisierender Krümmungsradius 14 ist kleiner als ein den zweiten gekrümmten Teilbereich 13 charakterisierender Krümmungsradius 15. In dem gezeigten Beispiel stehen die Radien 14, 15 in einem Verhältnis von 1:2. Die Rillenflanken 4, 5 weisen Neigungswinkel 16, 17 gegenüber der Radialrichtung auf. Ein minimaler Neigungswinkel 16 der ersten Rillenflanke 4 in dem radial unteren Bereich 3 liegt in dem geradlinigen Teilbereich der ersten Rillenflanke 4 und ein minimaler Neigungswinkel 17 der zweiten Rillenflanke 5 in dem radial unteren Bereich 3 liegt in dem geradlinigen Teilbereich der zweiten Rillenflanke 5 vor. Die beiden minimalen Neigungswinkel 16, 17 stehen in dem gezeigten Beispiel in einem Verhältnis von ca. 2:5. Der Rillenboden 18 zwischen den beiden gekrümmten Teilbereichen 12, 13 ist in dem gezeigten Beispiel gekrümmt. Ein den Rillenboden 18 charakterisierender Krümmungsradius 19 ist in Fig. 3 nicht in vollständiger Länge dargestellt. Der Radius 19 steht in dem gezeigten Beispiel in einem Verhältnis von 2,5 zu dem den zweiten gekrümmten Teilbereich 13 charakterisierenden Krümmungsradius 15.

### Bezugszeichenliste

- 1: Profilrille
- 2: radial oberer Bereich
- 3: radial unterer Bereich
- 4: erste Rillenflanke
- 5: zweite Rillenflanke
- 6: laterale Überhänge
- 7: Rillenbreite
- 8: Fase
- 9: abgeschrägter Übergang
- 10: Basisfläche
- 11: radiale Tiefe der Profilrille
- 12: erster gekrümmter Teilbereich
- 13: zweiter gekrümmter Teilbereich
- 14: minimaler den Teilbereich 12 charakterisierender Krümmungsradius
- 15: minimaler den Teilbereich 13 charakterisierender Krümmungsradius
- 16: minimaler Neigungswinkel der ersten Rillenflanke
- 17: minimaler Neigungswinkel der zweiten Rillenflanke
- 18: Rillenboden
- 19: den Rillenboden charakterisierender Krümmungsradius

## Patentansprüche

1. Laufstreifen für einen Fahrzeugreifen, wobei eine Profilrille (1) mit einem radial oberen Bereich (2) und einem radial unteren Bereich (3) sowie mit zwei Rillenflanken (4, 5) in dem Laufstreifen ausgebildet ist, wobei in dem radial oberen Bereich (2) der Profilrille (1) laterale Überhänge (6) so an den Rillenflanken (4, 5) ausgebildet sind, dass eine Rillenbreite (7) in dem radial oberen Bereich (2) kleiner ist als in dem radial unteren Bereich (3), wobei die Profilrille (1) in dem radial oberen Bereich (2) einen zickzackförmigen und/oder geschwungenen Verlauf annimmt und in dem radial unteren Bereich (3) einen geradlinigen Verlauf annimmt, wobei, betrachtet in einer zur Längserstreckung der Profilrille (1) senkrechten Schnittfläche, der radial untere Bereich (3) asymmetrisch zu einer Radialrichtung ausgebildet ist,
**dadurch gekennzeichnet,**
**dass** eine Periodizität des zickzackförmigen und/oder geschwungenen Verlaufs im radial oberen Bereich in einem Verhältnis von 1:3 bis 1:1 zu einer Pitchlänge eines in dem Laufstreifen ausgebildeten Profils steht.

2. Laufstreifen gemäß Anspruch 1, **dadurch gekennzeichnet, dass** ein Rillenboden (18) in dem radial unteren Bereich (3) der Profilrille (1) in einem ersten gekrümmten Teilbereich (12) in die ersten Rillenflanke (4) übergeht und in einem zweiten gekrümmten Teilbereich (13) in die zweiten Rillenflanke (5) übergeht, wobei ein minimaler den ersten gekrümmten Teilbereich (12) charakterisierender Krümmungsradius (14) kleiner ist als ein minimaler den zweiten gekrümmten Teilbereich (13) charakterisierender Krümmungsradius (15).

3. Laufstreifen gemäß Anspruch 2, **dadurch gekennzeichnet, dass** ein Verhältnis zwischen dem minimalen den ersten gekrümmten Teilbereich (12) charakterisierenden Krümmungsradius (14) und dem minimalen den zweiten gekrümmten Teilbereich (13) charakterisierenden Krümmungsradius (15) zwischen 0,3 und 0,7 beträgt.

4. Laufstreifen gemäß einem der Ansprüche 1 bis 3, **dadurch gekennzeichnet, dass** die Rillenflanken (4, 5) Neigungswinkel (16, 17) gegenüber der Radialrichtung aufweisen, wobei ein minimaler Neigungswinkel (16) der ersten Rillenflanke (4) in dem radial unteren Bereich (3) und ein minimaler Neigungswinkel (17) der zweiten Rillenflanke (5) in dem radial unteren Bereich (3) in einem Verhältnis zwischen 1:3 und 1:2 stehen.

5. Laufstreifen gemäß einem der Ansprüche 1 bis 4, **dadurch gekennzeichnet, dass** zwischen den lateralen Überhängen (6) im radial oberen Bereich (2) und dem radial unteren Bereich (3) abgeschrägte Übergänge (9) an den Rillenflanken (4, 5) ausgebildet sind.

6. Laufstreifen gemäß einem der Ansprüche 1 bis 5, **dadurch gekennzeichnet, dass** an den lateralen Überhängen (6) der Rillenflanken (4, 5) im radial oberen Bereich (2) Fasen (8) als Übergänge zu einer Basisfläche (10) des Laufstreifens ausgebildet sind.

7. Laufstreifen gemäß einem der Ansprüche 1 bis 6, **dadurch gekennzeichnet, dass** die Rillenbreite (7) in dem radial oberen Bereich (2) einen Minimalwert annimmt.

8. Laufstreifen gemäß Anspruch 7, **dadurch gekennzeichnet, dass** der Minimalwert zwischen 0,5 mm und 5 mm, vorzugsweise zwischen 1 mm und 1,2 mm beträgt.

9. Laufstreifen gemäß einem der Ansprüche 7 oder 8, **dadurch gekennzeichnet, dass** der Minimalwert in einer radialen Tiefe zwischen 25% und 40%, vorzugsweise bei 30% der radialen Tiefe (11) der Profilrille (1) erreicht wird.

10. Laufstreifen gemäß einem der Ansprüche 1 bis 9, **dadurch gekennzeichnet, dass** die Rillenbreite (7) in dem radial unteren Bereich (3) einen Maximalwert annimmt.

11. Laufstreifen gemäß Anspruch 10, **dadurch gekennzeichnet, dass** der Maximalwert zwischen 5 mm und 15 mm beträgt.

12. Laufstreifen gemäß einem der Ansprüche 10 der 11, **dadurch gekennzeichnet, dass** der Maximalwert in einer radialen Tiefe zwischen 50% und 85% der radialen Tiefe (11) der Profilrille (1) erreicht wird.

13. Laufstreifen gemäß einem der Ansprüche 1 bis 12, **dadurch gekennzeichnet, dass** der zickzackförmige und/oder geschwungene Verlauf im radial oberen Bereich (2) senkrecht zur Längserstreckung der Profilrille (1) entlang dieser Längserstreckung eine Spanne zwischen 2 mm und 8 mm überstreicht.

14. Fahrzeugreifen mit einem Laufstreifen gemäß einem der Ansprüche 1 bis 13.

## Claims

1. Tread for a vehicle tyre, wherein a profile groove (1) with a radially upper region (2) and a radially lower region (3) and also with two groove flanks (4, 5) is formed in the tread, wherein, in the radially upper region (2) of the profile groove (1), lateral overhangs (6) are formed at the groove flanks (4, 5) in such a way that a groove width (7) is smaller in the radially upper region (2) than in the radially lower region (3), wherein the profile groove (1) follows a zigzag and/or curved path in the radially upper region (2) and a straight path in the radially lower region (3), wherein, when seen in a section plane perpendicular to the longitudinal extent of the profile groove (1), the radially lower region (3) is formed asymmetrically in relation to a radial direction,
**characterized**
**in that** a periodicity of the zigzag and/or curved path in the radially upper region is in a ratio of 1:3 to 1:1 to a pitch length of a profile formed in the tread.

2. Tread according to Claim 1, **characterized in that** a groove base (18) in the radially lower region (3) of the profile groove (1) transitions into the first groove flank (4) in a first curved sub-region (12) and transitions into the second groove flank (5) in a second curved sub-region (13), wherein a minimum radius of curvature (14) characterizing the first curved sub-region (12) is smaller than a minimum radius of curvature (15) characterizing the second curved sub-region (13).

3. Tread according to Claim 2, **characterized in that** a ratio between the minimum radius of curvature (14) characterizing the first curved sub-region (12) and the minimum radius of curvature (15) characterizing the second curved sub-region (13) is between 0.3 and 0.7.

4. Tread according to one of Claims 1 to 3, **characterized in that** the groove flanks (4, 5) have angles of inclination (16, 17) with respect to the radial direction, wherein a minimum angle of inclination (16) of the first groove flank (4) in the radially lower region (3) and a minimum angle of inclination (17) of the second groove flank (5) in the radially lower region (3) are in a ratio of between 1:3 and 1:2.

5. Tread according to one of Claims 1 to 4, **characterized in that** sloping transitions (9) are formed at the groove flanks (4, 5) between the lateral overhangs (6) in the radially upper region (2) and the radially lower region (3).

6. Tread according to one of Claims 1 to 5, **characterized in that** bevels (8) are formed as transitions to a base surface (10) of the tread at the lateral overhangs (6) at the groove flanks (4, 5) in the radially upper region (2).

7. Tread according to one of Claims 1 to 6, **characterized in that** the groove width (7) assumes a minimum value in the radially upper region (2).

8. Tread according to Claim 7, **characterized in that** the minimum value is between 0.5 mm and 5 mm, preferably between 1 mm and 1.2 mm.

9. Tread according to either of Claims 7 and 8, **characterized in that** the minimum value is attained at a radial depth of between 25% and 40%, preferably of 30%, of the radial depth (11) of the profile groove (1).

10. Tread according to one of Claims 1 to 9, **characterized in that** the groove width (7) assumes a maximum value in the radially lower region (3).

11. Tread according to Claim 10, **characterized in that** the maximum value is between 5 mm and 15 mm.

12. Tread according to either of Claims 10 and 11, **characterized in that** the maximum value is attained at a radial depth of between 50% and 85% of the radial depth (11) of the profile groove (1).

13. Tread according to one of Claims 1 to 12, **characterized in that** the zigzag and/or curved path in the radially upper region (2), perpendicular to the longitudinal extent of the profile groove (1), covers a span of between 2 mm and 8 mm along said longitudinal extent.

14. Vehicle tyre having a tread according to one of Claims 1 to 13.

## Revendications

1. Bande de roulement pour un pneu de véhicule, dans laquelle une rainure de profil (1) présentant une zone radialement supérieure (2) et une zone radialement inférieure (3) ainsi que deux flancs de rainures (4, 5) est réalisée dans la bande de roulement, des surplombs latéraux (6) étant réalisés sur les flancs de rainures (4, 5) dans la zone radialement supérieure (2) de la rainure de profil (1) de telle sorte qu'une largeur de rainure (7) soit inférieure dans la zone radialement supérieure (2) à celle de la zone radialement inférieure (3), la rainure de profil (1) adoptant un tracé en zigzag et/ou sinueux dans la zone radialement supérieure (2) et adoptant un tracé rectiligne dans la zone radialement inférieure (3), la zone radialement inférieure (3) étant asymétrique par rapport à une direction radiale lorsqu'on l'observe dans un plan de coupe perpendiculaire à l'extension longitudinale de la rainure de profil (1),
**caractérisée**
**en ce qu'**une périodicité du tracé en zigzag et/ou sinueux dans la zone radialement supérieure présente un rapport de 1:3 à 1:1 par rapport à une longueur de pas d'un profil réalisé dans la bande de roulement.

2. Bande de roulement selon la revendication 1, **caractérisée en ce qu'**un fond de rainure de profil (18) dans la zone radialement inférieure (3) de la rainure de profil (1) rejoint une première sous-zone incurvée (12) dans le premier flanc de rainure (4) et rejoint une deuxième sous-zone incurvée (13) dans le deuxième flanc de rainure (5), un rayon de courbure minimal (14) caractérisant la première sous-zone incurvée (12) étant inférieur à un rayon de courbure minimal (15) caractérisant la deuxième sous-zone incurvée (13).

3. Bande de roulement selon la revendication 2, **caractérisée en ce qu'**un rapport entre le rayon de courbure minimal (14) caractérisant la première sous-zone incurvée (12) et le rayon de courbure minimal (15) caractérisant la deuxième sous-zone incurvée (13) est compris entre 0,3 et 0,7.

4. Bande de roulement selon l'une quelconque des revendications 1 à 3, **caractérisée en ce que** les flancs de rainure (4, 5) présentent des angles d'inclinaison (16, 17) par rapport à la direction radiale, le rapport d'un angle d'inclinaison minimal (16) du premier flanc de rainure (4) dans la zone radialement inférieure (3) à un angle d'inclinaison minimal (17) du deuxième flanc de rainure (5) dans la zone radialement inférieure (3) étant compris entre 1:3 et 1:2.

5. Bande de roulement selon l'une quelconque des revendications 1 à 4, **caractérisée en ce que** des transitions biseautées (9) sont réalisées sur les flancs de rainure (4, 5) entre les surplombs latéraux (6) dans la zone radialement supérieure (2) et la zone radialement inférieure (3).

6. Bande de roulement selon l'une quelconque des revendications 1 à 5, **caractérisée en ce que**, sur les surplombs latéraux (6) des flancs de rainure (4, 5) dans la zone radialement supérieure (2), des chanfreins (8) sont réalisés en tant que transitions vers une surface de base (10) de la bande de roulement.

7. Bande de roulement selon l'une quelconque des revendications 1 à 6, **caractérisée en ce que** la largeur de rainure (7) dans la zone radialement supérieure (2) adopte une valeur minimale.

8. Bande de roulement selon la revendication 7, **caractérisée en ce que** la valeur minimale est comprise entre 0,5 mm et 5 mm, de préférence entre 1 mm et 1,2 mm.

9. Bande de roulement selon l'une quelconque des revendications 7 ou 8, **caractérisée en ce que** la valeur minimale est atteinte à une profondeur radiale comprise entre 25 % et 40 %, de préférence à 30 % de la profondeur radiale (11) de la rainure de profil (1).

10. Bande de roulement selon l'une quelconque des revendications 1 à 9, **caractérisée en ce que** la largeur de rainure (7) dans la zone radialement inférieure (3) adopte une valeur maximale.

11. Bande de roulement selon la revendication 10, **caractérisée en ce que** la valeur maximale est comprise entre 5 mm et 15 mm.

12. Bande de roulement selon l'une quelconque des revendications 10 ou 11, **caractérisée en ce que** la valeur maximale est atteinte à une profondeur radiale comprise entre 50 % et 85 % de la profondeur radiale (11) de la rainure de profil (1).

13. Bande de roulement selon l'une quelconque des revendications 1 à 12, **caractérisée en ce que** le tracé en zigzag et/ou sinueux dans la zone radialement supérieure (2) couvre une amplitude comprise entre 2 mm et 8 mm, perpendiculairement à l'extension longitudinale de la rainure de profil (1) et le long de cette extension longitudinale.

14. Pneu de véhicule comprenant une bande de roulement selon l'une quelconque des revendications 1 à 13.
